# EUROPÄISCHE PATENTANMELDUNG

(11) **EP 1 528 373 A2**
(43) Veröffentlichungstag der Anmeldung: **04.05.2005**
(21) Anmeldenummer: 04023464.3
(22) Anmeldetag: 01.10.2004
(51) Int. Cl.: G01F 1/84

(54) **Anbauteil und Coriolis-Massendurchflussmessgerät mit diesem Anbauteil**

(30) Priorität: 31.10.2003 DE 10351312
(71) Anmelder: ABB PATENT GmbH, 68526 Ladenburg (DE)
(72) Erfinder: Gebhardt, Jörg, Dr.-Ing., 55130 Mainz (DE); Kassubek, Frank, Dr., 79618 Rheinfelden (DE); Friedrichs, René, Dipl.-Phys., 68526 Ladenburg (DE); Waldi, Wolfgang, Dipl.-Ing., 69226 Nussloch (DE); Hug, Kuno, 69118 Heidelberg (DE)
(74) Vertreter: Miller, Toivo

(57) **Zusammenfassung**

Es wird ein Coriolis - Massendurchflussmessgerät beschrieben mit einem in gekoppelten Biege- und Torsionsmoden schwingenden Messrohr. Mit dem Messrohr ist ein bezüglich einer Rotationssymmetrieachse drehsymmetrisch ausgebildetes, in Torsionsschwingungen gleicher Frequenz aber entgegengesetzter Phasenlage zu den Torsionsschwingungsmoden des Messrohres versetzbares Anbauteil mechanisch verbunden. Das Anbauteil ist ein Hohlprofilschienen und/oder Balken mit geschlossenem Hohlquerschnitt umfassender mehrteiliger Körper. Die Rotationssymmetrieachse des Anbauteils verläuft parallel zu der durch die Mittelpunkte (4a, 6a) der Messstreckeneinlass- und Messstreckenauslassquerschnittsflächen (4, 6) festgelegten Geraden (8) (Zentralachse) oder fällt mit dieser zusammen.

## Beschreibung

Die Erfindung betrifft ein Anbauteil für ein Coriolis- Massendurchflussmessgerät (CMD) gemäß dem Oberbegriff des Anspruchs 1, sowie ein Coriolis-Massendurchflussmessgerät mit einem solchen Anbauteil.

CMD regen das vom Fluid durchströmte Messrohr zu einer periodischen Bewegung - typischerweise zu Biegeschwingungen - an und messen die Kraftwirkung des Fluides auf die Rohrwand an mindestens zwei Stellen. Aus der Phasendifferenz der Messsignale an den Messstellen kann der Massendurchfluss ermittelt werden.

Die Kraftwirkung des Fluides auf die Rohrwand aufgrund der Strömung (dies ist der Coriolis-Effekt) ist aber verglichen mit anderen auftretenden Kräften sehr klein. Um den Messeffekt von Untergrund und Störungen unterscheiden zu können, bestehen daher hohe Anforderungen an das Gerät bezüglich Symmetrie des Aufbaus etc. Insbesondere aber muss der CMD schwingungstechnisch möglichst vollständig von seiner Umgebung (insbesondere der Rohrleitung, in der er eingebaut ist, und deren Eigenschaften man nicht beeinflussen kann) abgekoppelt sein. Eine solche Entkopplung wird auch als "Balancierung" des CMD bezeichnet.

Im Stand der Technik wird eine Balancierung vielfach zu erreichen versucht, indem

Doppelrohrkonstruktionen und/oder gebogene Messrohre verwendet werden. Diese können eine Balancierung über einen weiten Dichtebereich des Fluides erreichen. Prozesstechnisch sind einrohrige, ungebogene Messrohre allerdings vorzuziehen. Bei diesen gibt es drei typische Ansätze (vgl. für eine Übersicht den Artikel "Einrohrtechnik bei Coriolis-Massemessem - eine Standortbestimmung", W. Drahm, atp 42, 7 (2000) S.20):
- fester symmetrischer Einbau
   Durch spezielle Einbauvorschriften soll hier sichergestellt werden, dass der CMD wohldefiniert an die Umgebung koppelt. Die Geräte selbst haben eine grosse Masse. Nachteile sind erhöhte Einbaukosten, schwere Befestigungen und eine grosse Empfindlichkeit des Gerätes gegen äussere Einflüsse (z. B. geringe Nullpunktsstabilität).
- Biege-Gegenschwinger
   Die Vibration des Messrohres wird durch Anbringen eines Biege-Gegenschwingers kompensiert. Dieser schwingt gegenphasig zum Messrohr und eliminiert im Idealfall die Oszillationsbewegung des Schwerpunktes. Dann koppeln keine Kräfte am Rand aus. Eine solche Kompensation funktioniert im Allgemeinen nur für eine Dichte des Fluides, bei anderen Dichten stimmen die Massenverhältnisse von Messrohr und Gegenschwinger nicht mehr und die Kopplung an die Umgebung steigt stark an. Dann sinkt auch die Messgenauigkeit.
- Torsionsgegenschwinger
   Anstelle eines Biege-Gegenschwingers wird durch exzentrisches Anbringen von Massen die Biegeeigenschwingung an eine Torsionsschwingung des Rohres gekoppelt. Es wurde vorgeschlagen, dies durch das Anbringen einer Anzahl von Auslegermassen am Messrohr zu erreichen, deren Schwerpunkte in einer gemeinsamen, senkrecht zur Biegeschwingungsebene durch die Längsachse des Messrohres verlaufenden Ebene, jedoch im allgemeinen nicht auf dieser Längsachse liegen. Eine alternative Möglichkeit ist das Anbringen eines steifen exzentrischen Troges, wie in der US 2002/0117010A1 gezeigt. Da beide Schwingungsmoden (die Biege- und die Torsionsschwingungsmode) in ähnlicher Weise von der Fluidmasse beeinflusst werden, zeigt sich, dass man Randkräfte, d.h. Biege- und Torsionskräfte - über einen großen Dichtebereich kompensieren kann. Der balancierte Teil des Messrohres wird im folgenden auch als Messstrecke bezeichnet. Die Messdaten sollen nur innerhalb der solcherart balancierten Messstrecke aufgenommen werden.

Die Balancierung wie vorgeschlagen erkauft man allerdings damit, dass aufgrund der Torsionsschwingung symmetrische Drehmomente (Torsionsmomente) entlang der Rohrachse an den einlass- und auslassseitigen Enden des Messrohres angreifen. Symmetrisch heißt dabei, dass die einlass- und auslassseitigen Torsionsmomente betragsmäßig gleich, aber entweder gleichsinnig oder gegensinnig orientiert sind. Über diese axialen. Torsionsmomente findet weiterhin eine unerwünschte schwingungstechnische Kopplung an die Umgebung des CMD statt.

Es wurde vorgeschlagen, die Kopplung der Torsionsmomente dadurch zu überwinden, dass ein bezüglich einer Rotationssymmetrieachse drehsymmetrisch ausgebildetes, in Torsionsschwingungen gleicher Frequenz, aber entgegengesetzter Phasenlage zu den Torsionsschwingungsmoden des Messrohres versetzbares Anbauteil mechanisch mit dem Messrohr verbunden wird. Die Rotationssymmetrieachse des Anbauteils soll parallel zu der durch die Mittelpunkte der Messstreckeneinlass- und Messstreckenauslassquerschnittsflächen festgelegten Geraden, die im folgenden kurz als Zentralachse bezeichnet wird, verlaufen oder mit dieser zusammenfallen. Bei einem vollständig geraden Messrohr fällt die Zentralachse mit der Messrohrmittellinie und der Rotationssymmetrieachse des Messrohres zusammen.

Drehsymmetrisch bedeutet hier symmetrisch im Sinne einer sogenannten n-zähligen Drehsymmetrie. N ist dabei eine natürliche Zahl. Ein Körper weist dann eine n-zählige Drehsymmetrie auf, wenn bei Drehung um die Rotationssymmetrieachse um einen Winkel von 360°/n der Körper in sich selbst abgebildet wird. Beispielsweise besitzt ein längserstreckter Quader mit quadratischen Grundflächen eine 4-zählige Drehsymmetrie bezüglich einer parallel zur Längserstreckungsrichtung verlaufenden Zentralachse. Denn bei Drehung um jeweils 90° um diese Rotationssymmetrieachse wird der Quader in sich abgebildet. Ein längserstreckter Quader mit rechteckigen Stirnflächen hat eine 2-zählige Drehsymmetrie. Ein Voll- oder Hohlzylinder, beispielsweise ein Messrohr, mit homogener Massenverteilung hätte als Extremfall einer n-zähligen Drehsymmetrie eine "unendlich-zählige" Drehsymmetrie, da jede Drehung um jeden beliebigen Winkel den Hohl- oder Vollzylinder in sich selbst abbildet. In diesem Fall spricht man auch von Rotationssymmetrie.

Das vorgeschlagene Anbauteil kann spiegelsymmetrisch bezüglich einer senkrecht zur Rotationssymmetrieachse orientierten und die Zentralachse in der Mitte der Messstrecke schneidenden Symmetrieebene sein. Spiegelsymmetrisch bedeutet, dass das Anbauteil bei Spiegelung an der Symmetrieebene in sich selbst übergeht.

Nach dem Stand der Technik können Anbauteile zur Schwingungskompensation an Messrohren von Coriolis-Massendurchflussmessgeräten nur aus massiven Bauelementen, wie beispielsweise Balken oder Stäben oder Scheiben aus Vollmaterial hergestellt werden, einmal um die nötige Steifigkeit und zweitens um das nötige Gewicht zu erreichen. Als Folge sind schwingungskompensierte CMD heute sehr schwer. Vorgeschlagene CMD wie oben beschrieben benötigen allerdings keine großen Kompensationsmassen mehr.

Es ist daher die Aufgabe der vorliegenden Erfindung, ein Anbauteil zu schaffen, mit dem ein balanziertes CMD herstellbar ist, das leichter und billiger zu fertigen ist und weniger Material benötigt.

Die Aufgabe wird hinsichtlich des Anbauteils gelöst durch die kennzeichnenden Merkmale des Anspruchs 1 und hinsichtlich des CMD durch die Merkmale des Anspruchs 10.

Erfindungsgemäß also ist das Anbauteil ein Hohlprofilschienen und/oder Balken mit geschlossenem Hohlquerschnitt umfassender mehrteiliger Körper. Das Anbauteil kann insbesondere Balken mit geschlossenem Hohlquerschnittsprofil umfassen, wobei die Balken ein rundes oder ovales oder rechteckiges oder mäandriertes Hohlquerschnittsprofil aufweisen können.

Ein erfindungsgemäßes Anbauteil kann aber auch längserstreckte Profilschienen umfassen, die beispielsweise, aber nicht abschließend, U-Form oder L-Form oder V-Form aufweisen können.

Die Profilschienen können durch Verstrebungen quer zur Längserstreckungsrichtung versteift sein. Der Vorteil einer solchen Ausführung besteht darin, dass störende niederfrequente Vibrationen der offenen Kanten dadurch vermieden werden.

In einer besonders vorteilhaften Ausführungsform sind die Schwingungseigenschaften des Anbauteils durch die Profilwandstärke und/oder die Torsionsflächenmomente der Profilschienen bzw. der Balken einstellbar.

Bei erfindungsgemäßen Anbauteilen können die Profilschienen und/oder Balken Ausnehmungen aufweisen, in die Einlegeteile zur Gewichtskompensation eingebracht sind. Der Vorteil liegt dann darin, dass durch die Ausnehmungen andere Bauteile des CMD wie beispielsweise Sensoren oder Aktoren, zugänglich von außen werden, aber der Gewichtsverlust, der durch das Herausschneiden der Ausnehmung entstanden ist, durch das Einlegeteil wieder ausgeglichen wird. Die Schwingungseigenschaften des Anbauteils bleiben dadurch unverändert. Die Einlegeteile können in vorteilhafter Weise hohle Hülsen sein, die in die Ausnehmungen eingeschraubt oder eingeschweißt werden.

Ein erfindungsgemäßes CMD umfasst ein in gekoppelten Biege- und Torsionsmoden schwingendes Messrohr, an das ein bezüglich einer Rotationssymmetrieachse drehsymmetrisch ausgebildetes, in Torsionsschwingungen gleicher Frequenz aber entgegengesetzter Phasenlage zu den Torsionsschwingungsmoden des Messrohres versetzbares Anbauteil, das wie oben beschriebe aufgebaut ist, mechanisch mit dem Messrohr verbunden ist und die Rotationssymmetrieachse des Anbauteils parallel zu der durch die Mittelpunkte der Messstreckeneinlass- und Messstreckenauslassquerschnittsflächen festgelegten Geraden (Zentralachse) verläuft oder mit dieser zusammenfällt.

Das Anbauteil kann dabei spiegelsymmetrisch bezüglich einer senkrecht zu der Rotationssymmetrieachse orientierten und die Zentralachse in der Mitte der Messstrecke schneidenden Symmetrieebene sein.

In besonders vorteilhafter Ausgestaltung kann wenigstens ein weiteres Kompensationsteil zur Kompensation von Biege- und/oder Torsionskräften an dem Messrohr angebracht sein.

Das Anbauteil kann einlass- und auslassseitig mit dem Messrohr verbunden sein, insbesondere an den einlass- und auslassseitigen Messstreckenenden, aber auch innerhalb der Messstrecke.

Auch das weitere Kompensationsteil kann innerhalb der Messstrecke an dem Messrohr angebracht sein.

Das Anbauteil kann das Messrohr zumindest im Bereich der Messstrecke umhüllen, es könnte aber auch außerhalb des Messrohres angeordnet, aber mit diesem verbunden sein.

Das Coriolis Massendurchflussmessgerät kann ein einziges, gerades, oder auch ein gebogenes Messrohr umfassen, wobei das Messrohr insbesondere U- oder S- oder V-förmig gebogen sein kann.

Das erfindungsgemäße Anbauteil kann wenigstens einen ersten, einlassseitigen, einen zweiten, auslassseitigen und einen dritten, mittleren Teilabschnitt umfassen, wobei jeder Teilabschnitt bezüglich der Rotationssymmetrieachse drehsymmetrisch ausgebildet ist. Das Torsionsflächenmoment des mittleren Teilabschnitts ist dabei betragsmäßig größer ist als die Torsionsflächenmomente der einlass- und auslassseitigen Teilabschnitte.

Insbesondere vorteilhaft ist eine Ausführungsform, bei der die einlass- und auslassseitigen Teilabschnitte als Drehfedern und der mittlere Teilabschnitt als träge Masse wirken.

Die Schwingungseigenschaften des Anbauteils werden unter anderem von seinem Torsionsflächenmoment bezogen auf die Rotationssymmetrieachse bestimmt. Das Torsionsflächenmoment ist in der Mechanik eine bekannte Größe und beispielsweise beschrieben in Dubbel, Taschenbuch für den Maschinenbau, achtzehnte Auflage, Springer-Verlag Berlin, 1995, Seite C27 - C29. Das Torsionsflächenmoment von dünnwandigen Hohlkörpern mit konstanter Wanddicke ist, wie dort beispielsweise in Tab. 7 auf S. C29 angegeben, proportional zum Produkt aus dem Quadrat der von der Querschnittsmittellinie eingeschlossenen Fläche mit der Wanddicke, geteilt durch den Umfang der Querschnittsmittellinie. Der Verdrehungswinkel ist umgekehrt proportional zum Torsionsflächenmoment.

Daher ist es vorteilhaft, wenn das Torsionsflächenmoment des mittleren Teilabschnitts des Anbaukörpers größer ist als die Torsionsflächenmomente der einlass- und auslassseitigen Teilabschnitte. Bei einer solchen Ausführungsform ist dann sichergestellt, dass die einlass- und auslassseitigen Teilabschnitte als Torsionsfedern wirken und der mittlere Teilabschnitt als Masse, die in sich wenig tordiert.

Weiterhin ist bei dem erfindungsgemäßen CMD die Frequenz und Phasenlage der Torsionsschwingungsmode des Anbauteils durch das Verhältnis der Beträge der Torsionsflächenmomente des mittleren und der einlass- sowie auslassseitigen Teilabschnitte sowie durch die Lage der Übergänge zwischen dem mittleren und den einlass- bzw. auslassseitigen Teilabschnitten einstellbar. Die Übergänge zwischen dem mittleren und den einlass- bzw. auslassseitigen Teilabschnitten können dabei stufenförmig oder kontinuierlich erfolgen.

Weitere vorteilhafte Ausgestaltungen und Verbesserungen der Erfindung sind den Unteransprüchen zu entnehmen.

Anhand der Zeichnungen, in denen einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: ein Coriolis-Massendurchflussmessgerät mit einem erfindungsgemäßen Anbauteil
- Fig. 2: die Einzelansicht eines Hohlprofilbalkens zum Aufbau eines erfindungsgemäßen Anbauteils,
- Fig. 3 bis 6: verschiedene Hohlprofile zur Herstellung erfindungsgemäßer Anbauteile
- Fig. 7: ein CMD mit einem weiteren erfindungsgemäßen Anbauteil
- Fig. 8: ein weiteres CMD mit einem erfindnungsgemäßen Anbauteil
- Fig. 9: ein weiteres CMD mit einem erfindungsgemäßen Anbauteil.

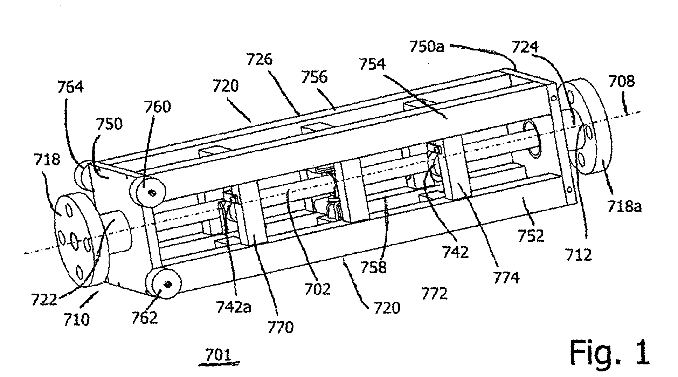

Fig. 1 zeigt ein Coriolis-Massendurchflussmessgerät 701 mit einem einzigen, geraden Messrohr 702. Die Zentralachse 708 des Messrohres 702 fällt hier mit der Rotationssymmetrieachse des Messrohres 702 zusammen. An den einlass- und auslassseitigen Enden 710, 712 des Messrohres 702 sind die Flansche 718, 718a zur Einbindung des Messgerätes 701 in ein Prozessrohrleitungssystem angebracht. Die Messstrecke erstreckt sich hier über die ganze Länge des Messrohres zwischen den Flanschen 718, 718a.

Mit dem Messrohr 702 ist ein bezüglich seiner Rotationssymmetrieachse 4-zählig drehsymmetrisches Anbauteil 720 verbunden, so dass das Anbauteil 720 das Messrohr und damit hier auch die Messstrecke 702 allseitig umgibt. Das Anbauteil 720 umfasst einen ersten, einlassseitigen, einen zweiten, auslassseitigen und einen dritten, mittleren Teilabschnitt 722, 724, 726 . Seine Rotationssymmetrieachse fällt mit der Zentralachse des Messrohres 702 zusammen.

Der erste, einlassseitige und der zweite, auslassseitige Teilabschnitt 722, 724 sind durch dünnwandige Hohlzylinder gebildet. Der dritte, mittlere Teilabschnitt 726 ist ein mehrteilig zusammengesetzter Körper, der 4-zählig drehsymmetrisch zur Zentralachse 708 des Messrohres ausgeführt ist. Dieser ist wie ein Quader ausgebildet, mit in etwa quadratischen Stirnplatten 750, 750a und vier die Längskanten des Quaders bildenden, parallel zum Messrohr 702 verlaufenden, Verbindungselementen 752, 754, 756, 758. Die Stirnplatten 750, 750a weisen zentrisch angeordnete Rundlöcher zur Durchführung des Messrohres auf. Einlass- und auslassseitig sind an den Stirnplatten 750, 750a die die ersten und zweiten Teilabschnitte bildenden Hohlzylinder 722, 724 angeschweißt, sie könnten auch angelötet oder durch eine anderweitige Verbindungstechnik verbunden sein. Die quaderförmigen Verbindungselemente 752, 754, 756, 758 sind an den Platten 750, 750a mechanisch befestigt, entweder geschweißt, gelötet oder verschraubt.

In der Mitte zwischen dem Einlass- und Auslassende und einlass- bzw. auslassseitig sind je zwei benachbarte Verbindungselemente 752, 754, 756, 758 durch senkrecht zu ihrer Längserstreckungsrichtung angeordnete, weitere Verbindungselemente verbunden, so dass jeweils eine rahmenartige Verstrebung 772, 770, 774 entsteht, die senkrecht zur Zentralachse des Messrohres orientiert ist.

An der mittleren Verstrebung 772 ist die Erregeranordnung befestigt, an den beiden einlass - und auslassseitigen Verstrebungen sind die Sensoren zur Aufnahme des Schwingungszustandes des Rohres angebracht.

Der Durchmesser der hohlzylindrischen ersten und zweiten Teilabschnitte 722, 724 ist kleiner als die Kantenlänge der quadratischen Stirnplatten 750, 752. Die ersten und zweiten Teilabschnitte 722, 724 fungieren als Torsionsfedern, der dritte Teilabschnitt 726 fungiert als Masse. Durch die rahmenartigen Verstrebungen 772, 770, 774 wird eine erhöhte Steifigkeit des dritten Teilkörpers bei geringem Gewicht erreicht.

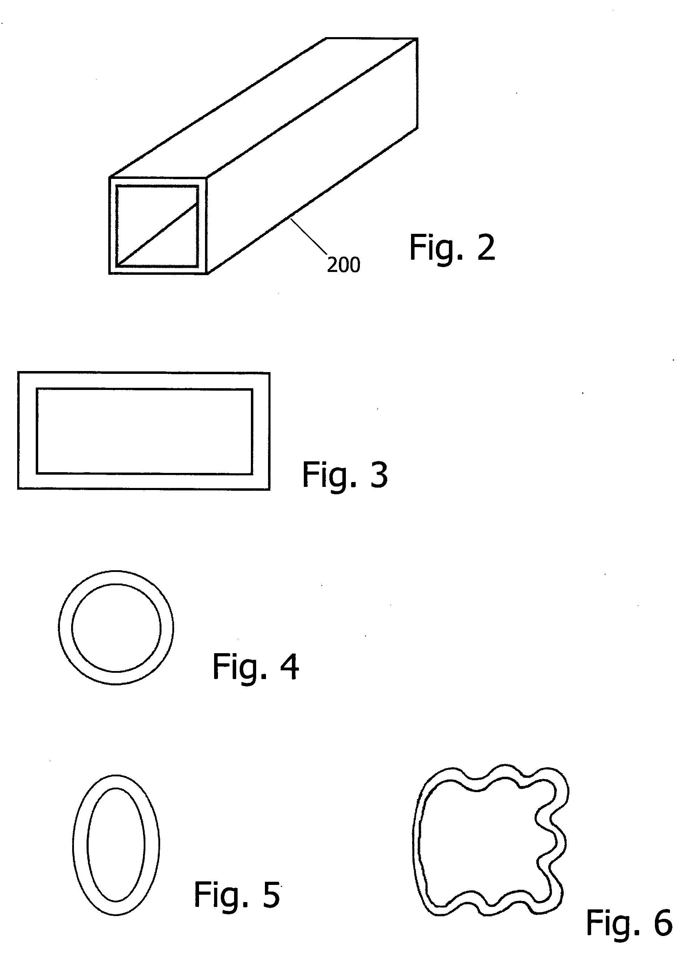

Die Verbindungselemente 752, 754, 756, 758 und auch die weiteren Verbindungselemente sind rechteckige Balken mit geschlossenem Hohlprofil, wie in Fig. 2 gezeigt. Die Fig. 3 bis 6 zeigen weitere mögliche Hohlprofilformen, die zum Aufbau eines erfindungsgemäßen Anbauteils verwendet werden können: rechteckig (Fig. 3), rund (Fig. 4) oval (Fig. 5) und mäandriert (Fig. 6).

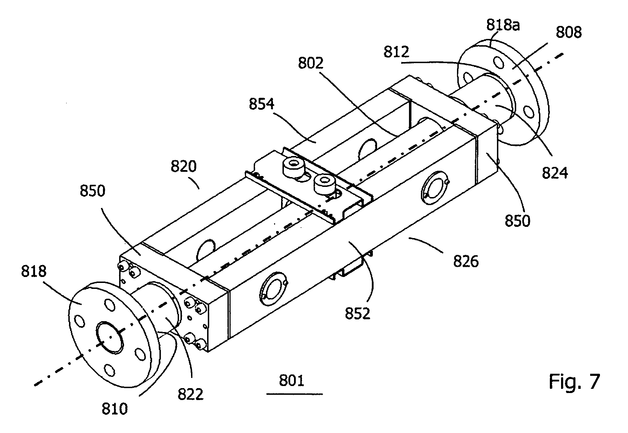

An den einlassseitigen Ecken des mittleren Teilkörpers 726 sind zylinderförmige Körper 760, 762, 764 als Justiermassen angeschraubt. Sie werden nach der Endmontage des Messgerätes angebracht und werden nach Gewicht und Abstand von dem mittleren Teilabschnitt 726 so ausgewählt, dass die Balancierung optimiert ist. Je nach Erfordernis können an allen acht Ecken Justiermassen angebracht sein, oder nur - wie in der Fig. 7 gezeigt - an einigen der Ecken.

Die Torsionsschwingungseigenschaften des Anbauteils 720 können eingestellt werden durch die geometrischen Eigenschaften der ersten und zweiten Teilkörper 722, 724 - nämlich deren Länge, Durchmesser und Wandstärke -, durch die geometrischen Eigenschaften des mittleren Teilkörpers - insbesondere durch dessen Länge und die Kantenlänge des Quaders - und durch die Massen der Verbindungselemente 752, 754, 756, 758 sowie durch die zusätzlich angebrachten Justiermassen

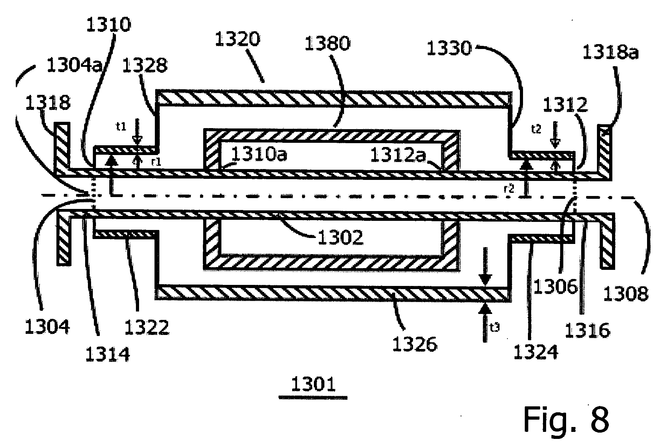

Fig. 8 zeigt eine weitere alternative Ausführungsform eines CMD mit erfindungsgemäßem Anbauteil.

Fig. 8 zeigt ein Coriolis-Massendurchflussmessgerät 801 mit einem einzigen, geraden Messrohr 802. Die Zentralachse 808 des Messrohres 802 fällt hier mit der Rotationssymmetrieachse des Messrohres 802 zusammen. An den einlass- und auslassseitigen Enden 810, 812 des Messrohres 802 sind die Flansche 818, 818a zur Einbindung des Messgerätes 801 in ein Prozessrohrleitungssystem angebracht. Die Messstrecke, also derjenige Bereich des Messrohres, indem die Wechselwirkung zwischen dem durch das Messrohr strömenden Medium und der Messrohrwand stattfindet, erstreckt sich hier über die ganze Länge des Messrohres zwischen den Flanschen 818, 818a.

Mit dem Messrohr 802 ist ein bezüglich seiner Rotationssymmetrieachse 2-zählig drehsymmetrisches Anbauteil 820 verbunden, so dass das Anbauteil 820 das Messrohr 802 allseitig umgibt. Das Anbauteil 820 umfasst einen ersten, einlassseitigen, einen zweiten, auslassseitigen und einen dritten, mittleren Teilabschnitt 822, 824, 826 . Seine Rotationssymmetrieachse fällt mit der Zentralachse des Messrohres 802 zusammen.

Der erste, einlassseitige und der zweite, auslassseitige Teilabschnitt 822, 824 sind durch dünnwandige Hohlzylinder gebildet. Der dritte, mittlere Teilabschnitt 826 ist ein mehrteilig zusammengesetzter Körper, der 2-zählich drehsymmetrisch zur Zentralachse 808 des Messrohres ausgeführt ist.

Dieser ist wie ein Quader ausgebildet, mit in etwa rechteckigen Stirnplatten 850, 850a und zwei parallel zum Messrohr 802 verlaufenden Verbindungselementen 852, 854 in der Form von längserstreckten Hohlquadern. Die Verbindungselemente 852, 854 sind jeweils an den Schmalseiten der Stimplatten 850, 850a mit diesen verschraubt. Ihre Höhe entspricht der Höhe der Stirnplatten 850, 850a. Insgesamt bilden die Stirnplatten 850, 850a zusammen mit den Verbindungselementen 852, 854 einen rechteckförmigen Rahmen. Auch die Strinplatten sind längserstreckte Hohlquader.

Die Stirnplatten 850, 850a weisen zentrisch angeordnete Rundlöcher zur Durchführung des Messrohres auf. Einlass- und auslassseitig sind an den Stirnplatten 850, 850a die die ersten und zweiten Teilabschnitte bildenden Hohlzylinder 822, 824 angeschweißt, sie könnten auch angelötet sein.

Der Durchmesser der hohlzylindrischen ersten und zweiten Teilabschnitte 822, 824 ist kleiner als die Kantenlänge der quadratischen Stirnplatten 850, 852. Die ersten und zweiten Teilabschnitte 822, 824 fungieren als Torsionsfedern, der dritte Teilabschnitt 826 fungiert als Masse.

Die Torsionsschwingungseigenschaften des Anbauteils 820 können eingestellt werden durch die geometrischen Eigenschaften der ersten und zweiten Teilkörper 822, 824 - nämlich deren Länge, Durchmesser und Wandstärke -, durch die geometrischen Eigenschaften des mittleren Teilkörpers - insbesondere durch dessen Länge und die Kantenlängen sowie das Verhältnis von Breite zu Höhe des Quaders - und durch die Massen der Verbindungselemente 752, 754.

Insgesamt weist die Ausführungsform nach Fig. 7 eine Ähnlichkeit mit der Ausführungsform nach Fig. 1 auf. Sie ist allerdings noch einfacher zu fertigen als jene.

In die Längsseiten der Verbindungselemente 852, 854 sind je zwei Ausnehmungen 880, 881 eingebracht. Durch diese Ausnehmungen hindurch können beispielsweise die Sensoren zur Aufnahme des Schwingungsmesssignals, die am Messrohr angebracht sind, durchgeführt werden. Durch das Einbringen der Ausnehmungen würde sich allerdings das Gewicht und damit die Schwingungseigenschaften des Anbauteils ändern. Daher sind in die Ausnehmungen 880, 881 Hülsen 882, 883 zur Gewichtskompensation und Versteifung der Ausnehmungskanten eingefügt und dort verschraubt.

Fig. 8 zeigt ein Coriolis-Massendurchflussmessgerät 1301 mit einem einzigen, geraden Messrohr 1302. Das Messrohr 1302 ist aus einem Stück gefertigt, aber funktional in eine einlass- und eine auslassseitige Rohrverlängerung 1314, 1316 und die dazwischenliegende Messstrecke, begrenzt von einer Messstreckeneinlassquerschnittsfläche 1304 und einer Messstreckenauslassquerschnittsfläche 1306, unterteilt. Durch deren Mittelpunkte 1304a, 13066a ist eine Zentralachse 1308 des Messrohres 1302 festgelegt. Die Zentralachse 1308 fällt hier mit der Rotationssymmetrieachse des Messrohres 1302 zusammen. An den Rohrverlängerungen 1314, 1316 sind die Flansche 1318, 1318a zur Einbindung des Messgerätes 1301 in ein Prozessrohrleitungssystem angebracht.

Mit dem Messrohr 1302 ist ein Anbauteil 1320 verbunden, so dass das Anbauteil 1320 das Messrohr 1302 im Bereich der Messstrecke allseitig umgibt. Das Anbauteil 1320 ist wie in Fig. 1 beschrieben aufgebaut, mit einem mittleren Teilabschnitt, der aus erfindungsgemäßen Hohlprofilkörpern zusammengesetzt ist. Es könnte auch wie in Fig. 7 beschrieben aufgebaut sein.

Das Messrohr 1302 kann, wie im Stand der Technik üblich, aus Metall, beispielsweise Titan, bestehen. Auch das Anbauteil 1320 kann aus Metall bestehen. Es ist an den einlass- bzw. auslassseitigen Enden 1310, 1312 der Messstrecke an das Messrohr angeschweißt.

An dem Messrohr 1302 ist ein weiteres Kompensationsteil 1380 zur Kompensation von Biege- und/oder Torsionskräften angebracht. Das Kompensationsteil ist als Rohr ausgebildet und mit dem Messrohr 1302 an Verbindungsstellen 1310a und 1310b befestigt, beispielsweise durch Schweißen oder Schrauben. Die Verbindungsstellen 1310a , 1312a des Kompensationsteils 1380 mit dem Messrohr 1302 liegen damit innerhalb der Messtrecke.

Der der Anordnung nach Fig. 8 zugrundeliegende Gedanke ist, dass der Teil des Messrohres, der durch das wenigstens eine Kompensationsteil in Bezug auf Biege- und/oder Torsionskräfte kompensiert ist und der Teil, der durch das Anbauteil in Bezug auf das Torsionsmoment kompensiert ist, deckungsgleich sein können, oder einer der beiden Teile umfasst den anderen. Der jeweils größere der beiden Teile definiert die Messstrecke. Im Fall der Fig. 8 definiert der Teil, der durch das Anbauteil kompensiert ist, die Messstrecke.

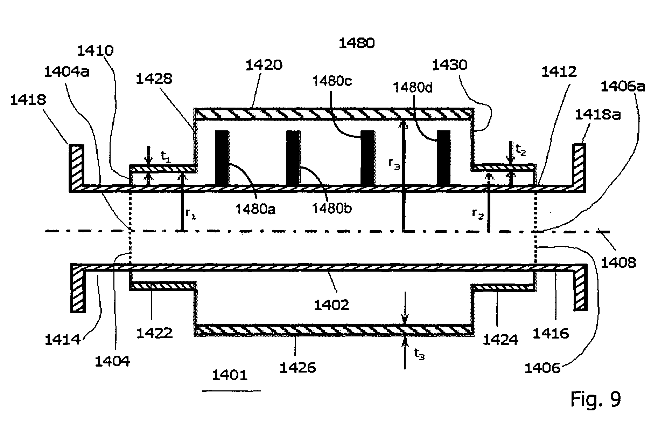

Fig. 9 zeigt ein Coriolis-Massendurchflussmessgerät 1401 mit einem einzigen, geraden Messrohr 1402. Das Messrohr 1402 ist aus einem Stück gefertigt, aber funktional in eine einlass- und eine auslassseitige Rohrverlängerung 1414, 1416 und die dazwischenliegende Messstrecke, begrenzt von einer Messstreckeneinlassquerschnittsfläche 1404 und einer Messstreckenauslassquerschnittsfläche 1406, unterteilt. Durch deren Mittelpunkte 1404a, 1406a ist eine Zentralachse 1408 des Messrohres 1402 festgelegt. Die Zentralachse 1408 fällt hier mit der Rotationssymmetrieachse des Messrohres 1402 zusammen. An den Rohrverlängerungen 1414, 1416 sind die Flansche 1418, 1418a zur Einbindung des Messgerätes 1401 in ein Prozessrohrleitungssystem angebracht.

Mit dem Messrohr 1402 ist ein Anbauteil 1420 verbunden, so dass das Anbauteil 1420 das Messrohr 1402 im Bereich der Messstrecke allseitig umgibt. Das Anbauteil 1420 ist wie in Fig. 1 beschrieben aufgebaut, mit einem mittleren Teilabschnitt, der aus erfindungsgemäßen Hohlprofilkörpern zusammengesetzt ist. Es könnte auch wie in Fig. 7 beschrieben aufgebaut sein. Seine Rotationssymmetrieachse fällt mit der Zentralachse 1408 des Messrohres 1402 zusammen.

Das Messrohr 1402 kann, wie im Stand der Technik üblich, aus Metall, beispielsweise Titan, bestehen. Auch das Anbauteil 1420 kann aus Metall bestehen. Es ist an den einlass- bzw. auslassseitigen Enden 1410, 1412 der Messstrecke an das Messrohr angeschweißt.

An dem Messrohr 1402 sind als weitere Kompensationsteile vier Platten 1480a, 1480b, 1480c, 1480d exzentrisch bezogen auf die Zentralachse 1408 an dem Messrohr angebracht. Sie bewirken auf eine früher bereits vorgeschlagene Art die Kompensation von Biege- und/oder Torsionskräften an dem Messrohr 1402. Die Platten 1480a,b,c,d sind so angeordnet, dass sie innerhalb der Messtrecke und innerhalb des mittleren Teilabschnitts 1426 des Anbauteils 1420 liegen.

## Patentansprüche

1. Anbauteil für ein Coriolis-Massendurchflussmessgerät , **dadurch gekennzeichnet, dass** das Anbauteil ein Hohlprofilschienen und/oder Balken mit geschlossenem Hohlquerschnitt umfassender mehrteiliger Körper ist.

2. Anbauteil nach Anspruch 1, **dadurch gekennzeichnet, dass** das Anbauteil Balken mit geschlossenem Hohlquerschnittsprofil umfasst.

3. Anbauteil nach Anspruch 2, **dadurch gekennzeichnet, dass** die Balken ein rundes oder ovales oder rechteckiges oder mäandriertes Hohlquerschnittsprofil aufweisen.

4. Anbauteil nach einem der vorigen Ansprüche, **dadurch gekennzeichnet, dass** das Anbauteil längserstreckte Profilschienen umfasst.

5. Anbauteil nach Anspruch 4, **dadurch gekennzeichnet, dass** die Profilschienen U-Form oder L-Form oder V-Form aufweisen.

6. Anbauteil nach Anspruch 5, **dadurch gekennzeichnet, dass** die Profilschienen durch Verstrebungen quer zur Längserstreckungsrichtung versteift sind.

7. Anbauteil nach einem der vorigen Ansprüche, **dadurch gekennzeichnet, dass** die Schwingungseigenschaften des Anbauteils durch die Profilwandstärke und/oder die Torsionsflächenmomente der Profilschienen bzw. der Balken einstellbar sind.

8. Anbauteil nach einem der vorigen Ansprüche, **dadurch gekennzeichnet, dass** die Profilschienen und/oder Balken Ausnehmungen aufweisen, in die Einlegeteile zur Gewichtskompensation eingebracht sind.

9. Anbauteil nach Anspruch 8, **dadurch gekennzeichnet, dass** die Einlegeteile hohle Hülsen sind, die in die Ausnehmungen eingeschraubt oder eingeschweißt werden.

10. Coriolis - Massendurchflussmessgerät mit einem in gekoppelten Biege- und Torsionsmoden schwingenden Messrohr, an das ein bezüglich einer Rotationssymmetrieachse drehsymmetrisch ausgebildetes, in Torsionsschwingungen gleicher Frequenz aber entgegengesetzter Phasenlage zu den Torsionsschwingungsmoden des Messrohres versetzbares Anbauteil nach einem der Ansprüche 1 bis 9 mechanisch mit dem Messrohr verbunden ist und die Rotationssymmetrieachse des Anbauteils parallel zu der durch die Mittelpunkte (4a, 6a) der Messstreckeneinlass- und Messstreckenauslassquerschnittsflächen (4, 6) festgelegten Geraden (8) (Zentralachse) verläuft oder mit dieser zusammenfällt.

11. Coriolis-Massendurchflussmessgerät nach Anspruch 10, **dadurch gekennzeichnet, dass** das Anbauteil spiegelsymmetrisch bezüglich einer senkrecht zu der Rotationssymmetrieachse orientierten und die Zentralachse in der Mitte der Messstrecke schneidenden Symmetrieebene ist.

12. Coriolis-Massendurchflussmessgerät nach einem der Ansprüche 10 bis 11, **dadurch gekennzeichnet, dass** wenigstens ein weiteres Kompensationsteil zur Kompensation von Biege- und/oder Torsionskräften an dem Messrohr angebracht ist.

13. Coriolis-Massendurchflussmessgerät nach einem Ansprüche 10 bis 12, **dadurch gekennzeichnet, dass** das Anbauteil einlass- und auslassseitig mit dem Messrohr verbunden ist .

14. Coriolis-Massendurchflussmessgerät nach Anspruch 13, **dadurch gekennzeichnet, dass** das Anbauteil an den einlass- und auslassseitigen Messstreckenenden mit dem Messrohr verbunden ist.

15. Coriolis-Massendurchflussmessgerät nach Anspruch 13, **dadurch gekennzeichnet, dass** das Anbauteil innerhalb der Messstrecke mit dem Messrohr verbunden ist.

16. Coriolis-Massendurchflussmessgerät nach einem der Ansprüche 10 bis 15, **dadurch gekennzeichnet, dass** das weitere Kompensationsteil innerhalb der Messstrecke an dem Messrohr angebracht ist.

17. Coriolis-Massendurchflussmessgerät nach einem der Ansprüche 10 bis 16, **dadurch gekennzeichnet, dass** das Anbauteil das Messrohr zumindest im Bereich der Messstrecke umhüllt.

18. Coriolis- Massendurchflussmessgerät nach einem der Ansprüche 10 bis 17, **dadurch gekennzeichnet, dass** das Anbauteil außerhalb des Messrohres angeornet, aber mit diesem verbunden ist.

19. Coriolis-Massendurchflussmessgerät nach einem der Ansprüche 10 bis 18 , **dadurch gekennzeichnet, dass** das Massendurchflussmessgerät ein einziges, gerades Messrohr umfasst.

20. Coriolis-Massendurchflussmessgerät nach einem der Ansprüche 10 bis 19, **dadurch gekennzeichnet, dass** das Messrohr ein gebogenes Messrohr umfasst.

21. Coriolis-Massendurchflussmessgerät nach Anspruch 20, **dadurch gekennzeichnet, dass** das Messrohr U- oder S- oder V-förmig gebogen ist.

22. Coriolis-Massendurchflussmessgerät nach einem der Ansprüche 10 bis 21, **dadurch gekennzeichnet, dass** das Anbauteil wenigstens einen ersten, einlassseitigen, einen zweiten, auslassseitigen und einen dritten, mittleren Teilabschnitt umfasst, wobei jeder Teilabschnitt bezüglich der Rotationssymmetrieachse drehsymmetrisch ausgebildet ist.

23. Coriolis-Massendurchflussmessgerät nach einem der Ansprüche 10 bis 22, **dadurch gekennzeichnet, dass** das Torsionsflächenmoment des mittleren Teilabschnitts betragsmäßig größer ist als die Torsionsflächenmomente der einlassund auslassseitigen Teilabschnitte.

24. Coriolis-Massendurchflussmessgerät nach Anspruch 23, **dadurch gekennzeichnet, dass** die einlass- und auslassseitigen Teilabschnitte als Drehfedern und der mittlere Teilabschnitt als träge Masse wirken.

25. Coriolis-Massendurchflussmessgerät nach Anspruch 24, **dadurch gekennzeichnet, dass** die Frequenz und Phasenlage der Torsionsschwingungsmode des Anbauteils durch das Verhältnis der Beträge der Torsionsflächenmomente des mittleren und der einlass- sowie auslassseitigen Teilabschnitte sowie durch die Lage der Übergänge zwischen dem mittleren und den einlass- bzw. auslassseitigen Teilabschnitten einstellbar sind.

26. Coriolis-Massendurchflussmessgerät nach einem der Ansprüche 10 bis 25, **dadurch gekennzeichnet, dass** das Anbauteil in Torsionsschwingungen gleicher Frequenz aber entgegengesetzter Phasenlage zu den Torsionsschwingungen des Messrohres versetzt ist.

27. Coriolis-Massendurchflussmessgerät nach einem der Ansprüche 10 bis 26, **dadurch gekennzeichnet, dass** wenigstens ein Teilabschnitt des Anbauteils ein mehrteilig zusammengesetzter Körper ist.

28. Coriolis-Massendurchflussmessgerät nach Anspruch 27, **dadurch gekennzeichnet, dass** der mehrteilig zusammengesetzte Körper parallel zur Rotationssymmetrieachse verlaufende und an senkrecht zur Messrohrachse verlaufenden Platten gehaltene, längserstreckte Bauelemente umfasst.

29. Coriolis-Massendurchflussmessgerät nach einem der Ansprüche 10 bis 28, **dadurch gekennzeichnet, dass** das weitere Kompensationsteil ein exzentrisch bezüglich der Zentralachse angebrachter, steifer Trog oder ein Kompensationsrohr ist.

30. Coriolis-Massendurchflussmessgerät nach einem der Ansprüche 10 bis 29, **dadurch gekennzeichnet, dass** exzentrisch bezüglich der Zentralachse angebrachte Auslegermassen als weitere Kompensationsteile an dem Messrohr angebracht sind.

31. Coriolis-Massendurchflussmessgerät nach einem der Ansprüche 10 bis 30, **dadurch gekennzeichnet, dass** weitere gemäß den Ansprüchen 1 bis 9 ausgebildete Anbauteile zur Erfüllung anderer Funktionen an dem Messrohr angeracht sind.
